# EUROPÄISCHE PATENTSCHRIFT

(11) **EP 2 133 536 B1**
(45) Veröffentlichungstag und Bekanntmachung des Hinweises auf die Patenterteilung: **16.02.2011**
(21) Anmeldenummer: 09007327.1
(22) Anmeldetag: 03.06.2009
(51) Int. Cl.: F02B 29/04, F02B 37/24

(54) **Ladeluftkühler-Enteisung**
Charge air cooler deicing
Dégivrage de refroidisseur d'air de suralimentation

(30) Priorität: 12.06.2008 DE 102008028194
(43) Veröffentlichungstag der Anmeldung: 16.12.2009
(73) Patentinhaber: Audi AG, 85045 Ingolstadt (DE)
(72) Erfinder: Wolf, Rainer, 85055 Ingolstadt (DE)
(74) Vertreter: Lehle, Josef

(56) Entgegenhaltungen:
- WO-A1-2006/040053
- DE-A1-102005 001 757
- US-A- 4 237 689
- US-A- 4 683 725
- US-A1- 2007 234 792
- US-B1- 6 394 076

## Beschreibung

Die Erfindung betrifft ein Verfahren zum Betreiben einer Brennkraftmaschine, mit mindestens einem Lader, mindestens einem dem Lader nachgeschalteten Ladeluftkühler, mindestens einem mit dem Ladeluftkühler verbundenen Kühlkreislauf und mindestens einer den Lader regulierenden Druckeinstellvorrichtung.

Brennkraftmaschinen der eingangs genannten Art sind zum Beispiel aus der DE 10 2005 001 757 A1 bekannt. Der der Brennkraftmaschine zugeordnete Lader dient dazu, die der Brennkraftmaschine zugeführte Luft vor ihrem Eintritt in die Verbrennungsräume zu verdichten. Durch diese Maßnahme wird die der Verbrennung zur Verfügung stehende Luftmenge beziehungsweise der Luftdurchsatz, also der Luftmassenstrom pro Zeiteinheit, gegenüber einer Brennkraftmaschine ohne Lader erhöht. Durch die höhere, der Verbrennung zur Verfügung stehende Luftmenge kann die Leistung der Brennkraftmaschine deutlich gesteigert werden. Die Kompression des zugeführten Mediums, insbesondere Luft, bewirkt jedoch einen Temperaturanstieg. Dieser ist in erster Linie direkt der Kompression zuzuschreiben, allerdings erwärmt sich die Kompressorseite eines Laders während des Betriebs, beispielsweise durch Reibungseffekte oder Wärmeeintrag von dem erwärmten Medium beziehungsweise der Turbinenseite, sodass gerade bei niedrigen Kompressionsverhältnissen die Temperatur des Mediums weiter erhöht wird.

Diese Temperaturerhöhung des Mediums ist unerwünscht, da sie den Wirkungsgrad der Brennkraftmaschine verringert. Zum einen verringert sich mit steigender Temperatur die Dichte der Luft, sodass bei gleichbleibendem Brennraumvolumen die der Verbrennung zur Verfügung stehende Luftmasse abnimmt; zum anderen sinkt durch die steigende Eintrittstemperatur der Wirkungsgrad des thermodynamischen Kreisprozesses der Brennkraftmaschine. Um diese Nachteile zu vermeiden, kann die aus dem Lader kommende, der Brennkraftmaschine zugeführte Ladeluft mit Hilfe eines Ladeluftkühlers wieder auf ein niedrigeres Temperaturniveau heruntergekühlt werden. Der Ladeluftkühler ist üblicherweise an einen Kühlkreislauf angeschlossen und dient somit als Wärmetauscher zwischen einem Kühlfluid und der Ladeluft. Um den an der Brennkraftmaschine anliegenden Ladedruck regeln zu können, ist eine Druckeinstellvorrichtung vorgesehen. Über diese Druckeinstellvorrichtung kann bereits verdichtete Luft wieder in einen Bereich vor dem Lader gelangen, sodass eine Zirkulation vorliegt. Besonders bei niedrigen Außentemperaturen kann es vorkommen, dass große Mengen kalter Luft direkt in den Ladeluftkühler gelangen und es zur Bildung von Eis in dem Ladeluftkühler kommt. Diese erhöht den Druckverlust zwischen Lader und Motor, und senkt somit die Effizienz des Laders beziehungsweise der Brennkraftmaschine. Dies kann insbesondere während der Durchführung einer Kurbelgehäuseentlüftung der Fall sein. Die in der Luft enthaltene Feuchtigkeit kann in diesem Fall an dem Ladeluftkühler kondensieren, worauf es zur Bildung von Eis kommen kann.

Aus der WO 2006/040053 A1 ist bereits ein Kühler zur Kühlung von rückgeführten Abgasen einer Brennkraftmaschine bekannt, bei dem zur Feststellung eines Vereisungszustands des Kühlers eine Differenzdruckbestimmung durchgeführt wird. Um eine Vereisung des Abgaskühlers bei niedrigen Außentemperaturen zu vermeiden, wird dort vorgeschlagen, einer in Strömungsrichtung des Abgases vor dem Abgaskühler angeordneten Rohrschlange heißes Kühlmittel aus einem Kühlkreislauf der Brennkraftmaschine zuzuführen oder in Strömungsrichtung des Abgases vor der Stirnfläche des Abgaskühlers ein elektrisch beheizbares Heizgitter anzubringen.

Weiter ist aus der US 2007/234792 A1 ein Verfahren zum Betreiben einer Brennkraftmaschine mit einem Lader, einem dem Lader nachgeschalteten Ladeluftkühler und einem mit dem Ladeluftkühler verbundenen Kühlkreislauf bekannt, bei dem mit Hilfe eines Heizelements während Kälteperioden Wärme in ein Gehäuse des Ladeluftkühlers zugeführt wird, um eine Vereisung eines Ladeluftkanals durch das Gehäuse zu verhindern.

Es ist Aufgabe der Erfindung, ein Verfahren zum Betreiben einer Brennkraftmaschine der eingangs genannten Art zur Verfügung zu stellen, um einen solchen Vereisungszustand des Ladeluftkühlers einfach erkennen und durch eine geeignete Gegenmaßnahmen beseitigen zu können.

Diese Aufgabe wird erfindungsgemäß durch ein Verfahren mit den Merkmalen des Anspruchs 1 gelöst. Hierbei ist erfindungsgemäß zum einen eine Differenzdruckbestimmung der Ladeluft vorgesehen, um einen Vereisungszustand des Ladeluftkühlers feststellen zu können. Bilden sich in den Kühlvorrichtungen des Ladeluftkühlers Eispartikel aus, so erhöht dies den Druckverlust. Durch eine Bestimmung des Drucks an verschiedenen Positionen kann somit eine erhöhte Druckdifferenz, insbesondere ein Absinken des brennkraftmaschinenseitigen Drucks festgestellt werden. Zum anderen wird erfindungsgemäß bei Feststellung eines Vereisungszustandes des Ladeluftkühlers das eingangsseitige Temperaturniveau durch Einstellen eines höheren Druckverhältnisses mittels der Druckeinstellvorrichtung erhöht. Durch die Temperaturerhöhung des in den Ladeluftkühler einströmenden Fluids wird das in dem Ladeluftkühler befindliche Eis abgeschmolzen und somit ein vorhandener Druckverlust über den Ladeluftkühler beseitigt.

Eine Weiterbildung der Erfindung sieht vor, dass die Differenzdruckbestimmung als eingangs- und ausgangsseitige Differenzdruckmessung an dem Ladeluftkühler und/oder mit einem Modell durchgeführt wird. Durch eine Positionierung der Druckaufnahmestellen an Einlass- und Auslassvorrichtungen des Ladeluftkühlers wird der Druckabfall über den gesamten Ladeluftkühler und nicht nur über einen Teilbereich erfasst. Somit stellt dies eine höchst effektive Anordnung der Druckaufnahmeposition dar. Weiterhin muss bei einer erfindungsgemäßen Ausführung keine Einbringung der Druckmessvorrichtung in den Ladeluftkühler selber erfolgen, sondern kann an den Anschlusselementen erfolgen. Dies erleichtert sowohl die Herstellung des Ladeluftkühlers, als auch den Austausch von einzelnen Motorelementen. Alternativ ist auch ein Abgleich mit einem Modell beziehungsweise mit modellierten Drücken möglich. Es muss also nicht an allen Positionen eine Druckmessvorrichtung vorgesehen sein.

Eine Weiterbildung der Erfindung sieht vor, dass das eingangsseitige Temperaturniveau durch Einstellen eines höheren Druckverhältnisses mittels der Druckeinstellvorrichtung und Verringerung der Leistung des Kühlkreislaufs erhöht wird. Die Druckeinstellvorrichtung wird dabei in Verbindung mit der Drosselklappe derart eingestellt, dass sich ein höheres Druckverhältnis bei gleichem Massenstrom ergibt. Die Leistung des Kühlkreislaufs kann beispielsweise durch Abschalten einer in dem Kühlkreislauf enthaltenen Pumpe herabgesetzt werden, womit die Aufheizungswirkung auf den Ladeluftkühler verstärkt wird.

Eine Weiterbildung der Erfindung ist dadurch gekennzeichnet, dass das vorstehend beschriebene Verfahren während und/oder nach einer Kurbelgehäuseentlüftung angewandt wird.

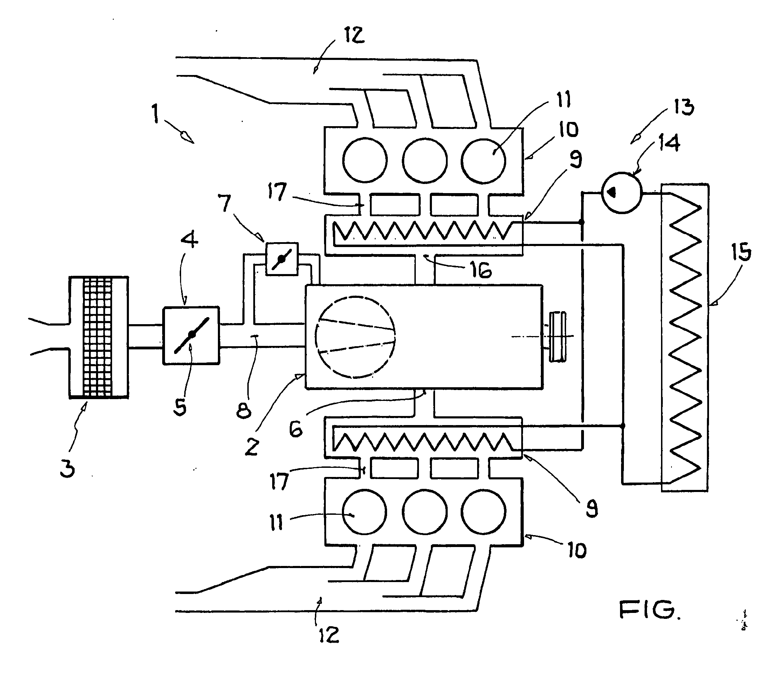

Die Zeichnung veranschaulicht die Erfindung anhand eines Ausführungsbeispiels, und zwar zeigt die Figur eine schematische Darstellung der Brennkraftmaschine.

Die Figur zeigt ausschnittsweise eine Brennkraftmaschine 1. Die Brennkraftmaschine 1 verfügt über einen Lader 2, der Außenluft über einen Luftfilter 3 und eine Drosselvorrichtung 4, die über eine Drosselklappe 5 verfügt, ansaugt. Die Luft wird im Lader 2 auf ein höheres Druck- und damit auch Temperaturniveau gebracht. Mit der Druckeinstellvorrichtung 7 kann der Luft-Volumenstrom welcher um den Lader 2 zirkuliert eingestellt und damit die der Brennkraftmaschine 1 zugeführte Luftmenge reguliert werden. Über die Druckeinstellvorrichtung 7 kann also Luft von der Ausgangsseite 6 des Laders 2 wieder in einen Einlassstutzen 8 vor dem Lader 2 gelangen und so der Druck auf der Ausgangseite 6 des Laders 2 mit der Druckeinstellvorrichtung 7 eingestellt werden. Auf der Ausgangsseite 6 des Laders 2 sind Ladeluftkühler 9 angeschlossen. Diese sind vorgesehen, um die durch den Lader 2 aufgeheizte Luft wieder auf ein niedrigeres Temperaturniveau zu bringen und damit die Dichte der Luft in der Brennkraftmaschine 1 zu erhöhen. Aus dem Ladeluftkühler 9 strömt die Luft in einen Motorblock 10 der Brennkraftmaschine 1, insbesondere über nicht dargestellte Einlassventile in den Zylinderraum 11. Nach der Verbrennung in dem Zylinderraum 11 werden die nunmehr entstandenen Abgase über einen Abgasstrang 12 aus dem Motorblock 10 herausbefördert. Die Ladeluftkühler 9 sind an einen Kühlkreislauf 13 angeschlossen, der mittels eines Kühlfluids den Ladeluftkühler kühlt. Dazu weist der Kühlkreislauf 13 eine Pumpe 14 auf, über die das Kühlfluid sowohl durch die Ladeluftkühler 9 als auch durch eine Wärmetauschvorrichtung 15 gefördert wird. Wird nun durch eine nicht dargestellte Differenzdruckmessvorrichtung eine Druckdifferenz zwischen Eingangsseite 16 und Ausgangsseite 17 des Ladeluftkühlers 9 festgestellt, so wird die Druckeinstellvorrichtung 7 derart eingestellt, dass sich das Druckverhältnis über den Lader erhöht. Unterstützend kann die Kühlleistung des Kühlkreislaufs 13 herabgesetzt werden, insbesondere durch Reduzierung der Förderungsleistung der Pumpe 14, insbesondere auch Abschalten der Pumpe 14. Daher bildet sich auf der Eingangsseite des Ladeluftkühlers 9 ein höheres Temperaturniveau aus. Durch das höhere Temperaturniveau werden im Ladeluftkühler 9 vorliegende Eispartikel abgeschmolzen. Dadurch verringert sich der Druckverlust im Ladeluftkühler 9 und der Druck auf der Ausgangsseite 17 steigt bezogen auf den Druck auf der Eingangsseite 16 des Ladeluftkühlers 9. Durch die Herabsetzung der Leistung des Kühlkreislaufs 13 wird der Luft weniger Wärme entzogen. Durch die daraus resultierende Erwärmung des Ladeluftkühlers 9 wird der beschriebene Effekt weiter verstärkt und in einem größeren Ausmaß Eis abgeschmolzen.

### BEZUGSZEICHENLISTE

- 1: Brennkraftmaschine
- 2: Lader
- 3: Luftfilter
- 4: Drosselvorrichtung
- 5: Drosselklappe
- 6: Ausgangsseite
- 7: Druckeinstellvorrichtung
- 8: Einlassstutzen
- 9: Ladeluftkühler
- 10: Motorblock
- 11: Zylinderraum
- 12: Abgasstrang
- 13: Kühlkreislauf
- 14: Pumpe
- 15: Wärmetauschvorrichtung
- 16: Eingangsseite
- 17: Ausgangsseite

## Patentansprüche

1. Verfahren zum Betreiben einer Brennkraftmaschine (1), mit
- mindestens einem Lader (2),
- mindestens einem dem Lader (2) nachgeschalteten Ladeluftkühler (9),
- mindestens einem mit dem Ladeluftkühler (9) verbundenen Kühlkreislauf (13)
und
- mindestens einer den Lader (2) regulierenden Druckeinstellvorrichtung (7),
**gekennzeichnet durch** eine Differenzdruckbestimmung der Ladeluft zur Feststellung eines Vereisungszustands des Ladeluftkühlers (9), sowie **durch** eine Erhöhung des eingangsseitigen Temperaturniveaus des Ladeluftkühlers (9) **durch** Einstellen eines höheren Druckverhältnisses mittels der Druckeinstellvorrichtung (7) bei Feststellung eines Vereisungszustands.

2. Verfahren zum Betreiben einer Brennkraftmaschine nach Anspruch 1, **dadurch gekennzeichnet, dass** die Differenzdruckbestimmung als eingangs- und ausgangsseitige Differenzdruckmessung an dem Ladeluftkühler (9) und/oder mit einem Modell durchgeführt wird.

3. Verfahren zum Betreiben einer Brennkraftmaschine nach einem oder mehreren der vorhergehenden Ansprüche, **dadurch gekennzeichnet, dass** das eingangsseitige Temperaturniveau durch Einstellen eines höheren Druckverhältnisses mittels der Druckeinstellvorrichtung (7) und Verringerung der Leistung des Kühlkreislaufs (13) erhöht wird.

4. Verfahren zum Betreiben einer Brennkraftmaschine nach einem oder mehreren der vorhergehenden Ansprüche, **gekennzeichnet durch** die Anwendung des Verfahrens während und/oder nach einer Kurbelgehäuseentlüftung.

## Claims

1. Method for operating an internal combustion engine (1), with
- at least one supercharger (2),
- at least one charge air cooler (9) connected downstream of the supercharger (2),
- at least one cooling circuit (13) connected to the charge air cooler (9), and
- at least one pressure-adjusting device (7) regulating the supercharger (2),
**characterized by** determining a differential pressure of the charge air in order to establish a state of icing of the charge air cooler (9), and by an increase in the input-side temperature level of the charge air cooler (9) by setting a higher pressure ratio by means of the pressure-adjusting device (7) when a state of icing is established.

2. Method for operating an internal combustion engine according to Claim 1, **characterized in that** the determination of the differential pressure is carried out as an input-side and output-side measurement of the differential pressure at the charge air cooler (9) and/or using a model.

3. Method for operating an internal combustion engine according to one or more of the preceding claims, **characterized in that** the input-side temperature level is increased by setting a higher pressure ratio by means of the pressure-adjusting device (7) and reducing the power of the cooling circuit (13) .

4. Method for operating an internal combustion engine according to one or more of the preceding claims, **characterized by** the use of the method during and/or after venting of the crankcase.

## Revendications

1. Procédé pour faire fonctionner un moteur à combustion interne (1), comprenant :
- au moins un surcompresseur (2),
- au moins un refroidisseur d'air de suralimentation (9) monté après le surcompresseur (2),
- au moins un circuit de refroidissement (13) connecté au refroidisseur d'air de suralimentation (9) et
- au moins un dispositif d'ajustement de la pression (7) régulant le surcompresseur (2), **caractérisé par** une détermination de pression différentielle de l'air de suralimentation pour établir un état de givrage du refroidisseur d'air de suralimentation (9), ainsi que par une augmentation du niveau de température du côté de l'entrée du refroidisseur d'air de suralimentation (9) par ajustement d'un rapport de pression plus élevé au moyen du dispositif d'ajustement de la pression (7) lors de la constatation d'un état de givrage.

2. Procédé pour faire fonctionner un moteur à combustion interne selon la revendication 1, **caractérisé en ce que** la détermination de la pression différentielle est effectuée sous forme de mesure de pression différentielle du côté de l'entrée et de la sortie au niveau du refroidisseur d'air de suralimentation (9) et/ou avec un modèle.

3. Procédé pour faire fonctionner un moteur à combustion interne selon l'une quelconque ou plusieurs des revendications précédentes, **caractérisé en ce que** le niveau de température du côté de l'entrée est augmenté par ajustement d'un rapport de pression plus élevé au moyen du dispositif d'ajustement de la pression (7) et par réduction de la puissance du circuit de refroidissement (13).

4. Procédé pour faire fonctionner un moteur à combustion interne selon l'une quelconque ou plusieurs des revendications précédentes, **caractérisé par** l'utilisation du procédé pendant et/ou après une ventilation du carter moteur.
